# EUROPÄISCHE PATENTSCHRIFT

(11) **EP 2 036 675 B1**
(45) Veröffentlichungstag und Bekanntmachung des Hinweises auf die Patenterteilung: **29.10.2014**
(21) Anmeldenummer: 08105335.7
(22) Anmeldetag: 12.09.2008
(51) Int. Cl.: B24B 53/085, B23F 23/12, B23F 21/03, B23F 21/02

(54) **Abrichtrad und Abrichtwerkzeug für das Abrichten von eine Verzahnung aufweisenden Werkzeugen für die Feinbearbeitung eines Werkstücks, insbesondere eines Zahnrades**
Dressing gear and dressing tool for dressing of a toothed tool which is used for finish machining of workpieces, in particular gears
Roue d'ajustement et outil d'ajustement pour ajuster des outils dotés d'une dent pour le traitement précis d'une pièce usinée, en particulier une roue dentée

(30) Priorität: 12.09.2007 DE 102007043404; 12.09.2007 DE 102007043384; 12.09.2007 DE 102007043402; 12.09.2007 DE 102007043405
(43) Veröffentlichungstag der Anmeldung: 18.03.2009
(73) Patentinhaber: Präwema Antriebstechnik GmbH, 37269 Eschwege/Werra (DE)
(72) Erfinder: Preis, Josef, 35287 Amöneburg-Mardorf (DE); Schieke, Jörg, 99092 Erfurt-Marbach (DE)
(74) Vertreter: Cohausz & Florack

(56) Entgegenhaltungen:
- EP-A1- 0 101 953
- DE-U1- 9 300 936
- US-A- 2 776 529

## Beschreibung

Die Erfindung betrifft ein Abrichtrad für das Abrichten von eine Verzahnung aufweisenden Werkzeugen für die Feinbearbeitung von Werkstücken, insbesondere von Zahnrädern oder anderen eine Verzahnung aufweisenden Bauteilen, wobei an dem Abrichtrad mindestens ein Abrichtzahn ausgebildet ist.

Ebenso betrifft die Erfindung ein Abrichtwerkzeug zum Abrichten eines Werkzeugs für die Feinbearbeitung eines Werkstücks, das aus einem solchen Abrichtrad und einem das Abrichtrad tragenden Träger zusammengesetzt ist.

Die mittels eines erfindungsgemäßen Abrichtrades bzw. Abrichtwerkzeuges abzurichtenden Feinbearbeitungswerkzeuge dienen beispielsweise zum Feinschleifen oder Honen von Werkstücken, bei denen es sich wiederum typischerweise um Zahnräder, Zahnstangen oder vergleichbare Bauteile handelt.

Üblicherweise sind die hier in Rede stehenden Feinbearbeitungswerkzeuge dabei als keramisch- oder harzgebundene Werkzeuge hergestellt, an denen eine Verzahnung ausgebildet ist, deren Gestalt der Form der zu bearbeitenden Verzahnung entspricht.

Im Zuge der jeweiligen Feinbearbeitung kommt es zu Verschleiß am Feinbearbeitungswerkzeug. Um sicherzustellen, dass die am zu bearbeitenden Werkstück durch die Feinbearbeitung zu erzeugenden Formelemente den an ihre Präzision gestellten Anforderungen genügen, müssen die Feinbearbeitungswerkzeuge daher in bestimmten Zeitabständen abgerichtet werden. Durch den Abrichtvorgang wird das Feinbearbeitungswerkzeug in einen Zustand versetzt, in dem eine optimale Präzision des Bearbeitungsergebnisses bei gleichzeitig hoher Abtragleistung gewährleistet ist.

Für das Abrichten der Feinbearbeitungswerkzeuge werden üblicherweise Abrichtwerkzeuge eingesetzt, in die das Profil des abzurichtenden Werkzeugs eingearbeitet ist. Zusätzlich können in das Abrichtwerkzeug Formelemente eingearbeitet sein, welche benötigt werden, um die gegebenenfalls erforderlichen Geometrieänderungen am abzurichtenden Werkzeug zu erzeugen.

Im Zuge des Abrichtvorgangs werden das Abrichtwerkzeug und das abzurichtende Feinbearbeitungswerkzeug in Eingriff gebracht und das Profil bzw. die Geometrie des Abrichtwerkzeugs auf das abzurichtende Feinbearbeitungswerkzeug übertragen.

Ein Beispiel für diese Vorgehensweise ist aus der JP 09-057624 A bekannt. Um einen optimalen Werkstoffabtrag während des Abrichtvorgangs bei gleichzeitig optimaler Übertragung der Form der Zähne des Abrichtrades auf das abzurichtende, innenverzahnte und ringförmig ausgebildete Honwerkzeug sicherzustellen, werden bei diesem Stand der Technik das Abrichtrad und das Werkzeug vor Beginn des Abrichtprozesses in bestimmter Weise positioniert und anschließend über jeweils getrennte, jedoch synchron laufende Antriebe solange angetrieben, bis das gewünschte Abrichtergebnis erreicht wird. Das zu diesem Zweck gemäß dem in der JP 09-057624 A beschriebenen Stand der Technik eingesetzte Abrichtrad ist schmaler als das abzurichtende Honwerkzeug. Jedoch ist seine Breite unter Berücksichtigung des Achskreuzwinkels, unter dem die Drehachse des abzurichtenden Werkzeugs und des Abrichtrades zueinander ausgerichtet sind, so bemessen, dass die Zähne des abzurichtenden Werkzeugs bei einem Umlauf jeweils über die gesamte Breite ihrer Zahnflanken von den Zähnen des Abrichtrades überstrichen werden.

Damit die Schneidwirkung des Abrichtwerkzeugs verstärkt wird, wird das Abrichtwerkzeug bei Vorrichtungen der voranstehend erläuterten Art neben der zwecks Einformung der jeweils gewünschten Zahnform erforderlichen Zustellbewegung (X-Richtung) üblicherweise auch noch oszillierend in Richtung seiner Drehachse bewegt (Z-Richtung). Da die Breite des Abrichtrades dabei annähernd der Breite des Honwerkzeugs und das jeweils verwendete Abrichtrad dem mittels des abzurichtenden Werkzeugs feinzubearbeitenden Zahnrads entspricht, können jedoch allenfalls geringe Korrekturen der Flankenlinie durch eine Änderung der Achseinstellwerte vorgenommen werden. So lassen sich Profilabweichungen und Abweichungen der Flankenlinien bei den konventionellen Maschinen nur dadurch ausgleichen, dass ein speziell für den Ausgleich dieser Fehler ausgelegtes Abrichtrad verwendet wird.

Ausgehend von dem voranstehend erläuterten Stand der Technik lag der Erfindung die Aufgabe zu Grunde, ein Abrichtrad und ein mit einem solchen Abrichtrad bestücktes Abrichtwerkzeug zu schaffen, welche auf einfache Weise eine hochpräzise Abrichtbearbeitung ermöglichen und dabei bei minimiertem Aufwand optimale Korrekturmöglichkeiten bieten.

In Bezug auf das Abrichtrad ist diese Aufgabe erfindungsgemäß dadurch gelöst worden, dass ein solches Abrichtrad die in Anspruch 1 angegebenen Merkmale besitzt. Vorteilhafte Ausgestaltungen des erfindungsgemäßen Abrichtrades sind in den von Anspruch 1 abhängigen Ansprüchen angegeben.

In Bezug auf das Abrichtwerkzeug ist die voranstehend genannte Aufgabe erfindungsgemäß dadurch gelöst worden, dass ein solches Abrichtwerkzeug gemäß Anspruch 10 ausgebildet ist. Vorteilhafte Ausgestaltungen des erfindungsgemäßen Abrichtrades sind in den von Anspruch 10 abhängigen Ansprüchen angegeben.

Die Erfindung basiert auf dem Gedanken, für die Abrichtbearbeitung ein zumindest im Bereich seiner mit dem abzurichtenden Werkzeug in Kontakt kommenden Zähne, bevorzugt aber vollständig, aus einem Diamantwerkstoff hergestelltes Abrichtrad zu verwenden, das mindestens in dem Bereich, in dem es zum Eingriff mit dem zu bearbeitenden Werkzeug kommt, eine minimierte Dicke besitzt.

Um diesen Gedanken in der Praxis zu verwirklichen, sieht die Erfindung vor, dass bei einem erfindungsgemäßen Abrichtrad die Dicke im Bereich des jeweiligen mit dem abzurichtenden Werkzeug in Eingriff kommenden Abrichtzahnes auf maximal 1,2 mm beschränkt ist.

Ein erfindungsgemäßes Abrichtwerkzeug umfasst dementsprechend ein erfindungsgemäß ausgebildetes Abrichtrad und einen Träger, an dem das erfindungsgemäße Abrichtrad gehalten ist.

Indem zum Abrichten eines Werkzeugs für die Feinbearbeitung von Zahnrädern mit unbestimmter Klinge ein gegenüber der Breite des abzurichtenden Werkzeugs sehr schmales Abrichtrad verwendet wird, lassen sich nicht nur Bearbeitungs- und Herstellkosten reduzieren, sondern es werden auch verbesserte Abrichter-Standzeiten durch bessere Ausnutzung der mit Diamanten besetzten Schneidflächen des Abrichtwerkzeugs erzielt.

Aufgrund dessen, dass bei Verwendung eines erfindungsgemäßen Abrichtrades die Breite des abzurichtenden Werkzeugs jeweils um ein Vielfaches größer ist als die Breite des Abrichtrades, kann das Abrichtrad im Zuge des Abrichtvorgangs bei in Eingriff befindlichem Abrichtrad und abzurichtendem Feinbearbeitungswerkzeug unabhängig von der Form der jeweils zu bearbeitenden Zähne in einer weitestgehend frei steuerbaren Bewegung entlang der Zahnflanken des abzurichtenden Werkzeugs bewegt werden. So lassen sich beispielsweise bei gerad- oder schrägverzahnten sowie bei in anderer Weise komplex geformt verzahnten Werkzeugen die jeweils erforderlichen Schrägungswinkel bzw. die jeweils abzubildende Zahnform allein durch die Bewegung bestimmen, die das Abrichtrad bei seinem Weg entlang der Zahnflanke des Zahns ausführt, mit dem es jeweils in Eingriff steht.

Die beim Stand der Technik aufgrund der notwendigerweise korrespondierenden Form von Abrichtrad und zu bearbeitendem Werkzeug sich ergebenden Einschränkungen bei der Formgebung des abzurichtenden Werkzeugs bestehen bei erfindungsgemäßer Vorgehensweise nicht mehr. Die durch die erfindungsgemäße Gestaltung eines Abrichtrades ermöglichte Vorgehensweise gestattet es vielmehr, mittels der an konventionellen Feinbearbeitungsmaschinen standardmäßig vorhandenen Verstellmöglichkeiten in X- und Z-Richtung sowie um die Bund C-Achse die am jeweils bearbeiteten Zahn zu erzeugende Form allein durch Maschinensteuerung vorzugeben. Selbstverständlich ist es dazu insbesondere zum Abrichten eines Werkzeugs zum Feinbearbeiten eines Zahnrades zweckmäßig, wenn das erfindungsgemäße Abrichtrad mehrere in gleichen Winkelabständen um seinen Umfang herum verteilt angeordnete Abrichtzähne aufweist, deren Dicke jeweils in gleicher erfindungsgemäßer Weise beschränkt ist.

Stattdessen kann ein erfindungsgemäßes Abrichtrad dazu genutzt werden, unterschiedlich geformte Werkzeuge abzurichten. Insbesondere können mit einem einzigen erfindungsgemäß schmalen Abrichtrad Werkzeuge abgerichtet werden, die sich hinsichtlich ihrer Formgebung, insbesondere hinsichtlich ihres Normalmoduls und ihrer Normalprofilform unterscheiden. Die im Stand der Technik noch bestehende Notwendigkeit, für jedes abzurichtende Werkzeug ein speziell an das jeweilige Werkzeug angepasstes Abrichtrad einzusetzen, ist somit durch die Erfindung aufgehoben.

Ebenso können bei Verwendung eines erfindungsgemäß schmalen Abrichtrades die jeweiligen Flanken der Zähne des abzurichtenden Werkzeugs unter voneinander abweichenden Vorgaben bearbeitet werden. So ist es beispielsweise möglich, die einander gegenüberliegenden Flanken zweier Zähne des abzurichtenden Werkzeugs nacheinander unterschiedlich auszuführen. Der besondere Vorteil besteht in dieser Hinsicht darin, dass die geringe Dicke des erfindungsgemäß eingesetzten Abrichtrades es erlaubt, die einzelnen Flanken der Zähne des abzurichtenden Werkzeugs unabhängig voneinander zu bearbeiten.

Ein besonderer Vorteil der erfindungsgemäßen Verwendung eines schmalen Abrichtrades besteht des Weiteren darin, dass durch die geringe Dicke des erfindungsgemäß gegenüber dem jeweils zu bearbeitenden Zahn des abzurichtenden Werkzeugs sehr schmalen Abrichtrades eine weitestgehende Freiheit der Beweglichkeit des Abrichtrades erzielt wird. Diese erlaubt es, zwischen den Zähnen des abzurichtenden Werkzeugs Korrekturen der Flankenlinien des abzurichtenden Werkzeugs unabhängig von einer bestimmten, allein auf das jeweils zu bearbeitende Werkzeug bezogenen Formgebung des Abrichtrades vorzunehmen. Eine Verstellmöglichkeit in einer zweiten Ebene zum Achskreuzwinkel ist dazu jeweils nicht erforderlich.

Das erfindungsgemäß eingesetzte Abrichtrad ist möglichst schmal ausgebildet. Optimaler Weise ist seine Breite so reduziert, dass seine den Zahnflanken des abzurichtenden Werkzeugs zugeordneten Schmalseiten nach Art einer Messerschneide ausgebildet sind oder, soweit dies aus materialtechnischen Gründen nicht möglich ist, zumindest so schmal sind, dass jeweils nur eine minimale Überdeckungsfläche zwischen den Schmalseiten des Abrichtrades und den Flankenflächen des zu bearbeitenden Werkzeugs gegeben ist.

Dementsprechend sieht eine vorteilhafte Ausgestaltung der Erfindung vor, dass die Breite der mit dem anzurichtenden Werkzeug in Eingriff kommenden Zähne des Abrichtrades höchstens einem Fünftel, bevorzugt höchstens einem Achtel, der Breite des abzurichtenden Werkzeugs entspricht. Für die Praxis kann dazu die Dicke des Abrichtrades zumindest im Bereich des jeweiligen Abrichtzahnes auf höchstens 1,0 mm beschränkt sein. Unter Berücksichtigung der mechanischen Eigenschaften der heute zur Verfügung stehenden Diamantwerkstoffe ist es dabei im Hinblick auf die Belastbarkeit des Abrichtrades zweckmäßig, zumindest in dem hinsichtlich seiner Belastung im praktischen Einsatz kritischen Bereich des Abrichtrades eine Mindestdicke von 0,5 mm vorzusehen.

Eine besonders einfache und praxisgerecht herstellbare Ausgestaltung der Erfindung ist **dadurch gekennzeichnet, dass** die Dicke des Abrichtrades an keiner Stelle größer ist als im Bereich des Abrichtzahns. So weist das Abrichtrad bevorzugt eine gleichmäßige Dicke auf. Diese Variante der Erfindung erlaubt es beispielsweise, das Abrichtrad aus einer vorgefertigten Diamantscheibe auszuschneiden oder durch gleichmäßiges Abscheiden auf einem Trägermaterial zu erzeugen.

Als Werkstoff für ein erfindungsgemäßes Abrichtrad sind alle synthetisch erzeugten Diamantwerkstoffe geeignet, die eine ausreichend hohe Belastbarkeit besitzen. Bei solchen Diamantwerkstoffen handelt es sich beispielsweise um einen in der Fachwelt auch unter dem Kürzel "PKD" bekannten polykristallinen Diamantwerkstoff. Aus PKD-Material vorgefertige Ronden, bei denen eine polykristalline Diamantschicht beispielsweise durch Abscheiden aus der Gasphase oder Auflöten einer vorgefertigten Scheibe bereits fest auf einem Trägermaterial aufgebracht ist, stehen auf dem freien Markt zur Verfügung.

Auch ist es möglich, das erfindungsgemäße Abrichtrad aus einem ebenso vorgefertigten monokristallinen synthetischen Diamantblatt herzustellen, das zur Herstellung eines erfindungsgemäßen Abrichtwerkzeugs mit einem beispielsweise aus Hartmetall bestehenden Trägermaterial stoffschlüssig verbunden wird, insbesondere das Trägermaterial aufgelötet wird.

Des Weiteren ist es denkbar, ein erfindungsgemäßes Abrichtwerkzeug dadurch herzustellen, dass auf einem aus Hartmetall bestehenden Trägermaterial durch Auftragslöten in Kornform vorliegende Diamanten aufgebracht werden.

Unabhängig davon wie der Diamantwerkstoff auf das Trägermaterial aufgebracht bzw. an ihm befestigt wird, kann das betreffende Trägermaterial bei einem erfindungsgemäßen Abrichtwerkzeugs als Träger dienen.

Des Weiteren bietet es sich unabhängig davon, wie die das erfindungsgemäße Abrichtrad bildende Diamantschicht hergestellt wird, an, die an dem erfindungsgemäßen Abrichtrad vorgesehenen Abrichtzähne durch Laserstrahlschneiden aus dem in der Regel als Scheibe vorliegenden Diamantwerkstoff herauszuschneiden. Alternativ ist es jedoch auch möglich, die Form des erfindungsgemäßen Abrichtrades durch ein materialabtragendes Verfahren, wie beispielsweise durch Funkenerosion, aus dem scheibenförmig vorliegenden Diamantwerkstoff herauszuarbeiten.

Um einen ordnungsgemäßen Eingriff von Abrichtwerkzeug und zu bearbeitendem Feinbearbeitungswerkzeug zu sichern, stehen beim erfindungsgemäßen Abrichtrad die jeweils vorhandenen Abrichtzähne in radialer Richtung frei von dem Abrichtwerkzeug ab. Der Außendurchmesser des Trägers ist dementsprechend kleiner als der größte Außendurchmesser des Abrichtrades. Optimaler Weise entspricht dabei der Außendurchmesser des Trägers dem Fußkreisdurchmesser des Abrichtrades, um eine maximale Abstützung des Abrichtrades sicherzustellen. Um gleichzeitig einen freien Abfluss des beim Abrichtvorgang abgetragenen Materials zu gewährleisten, kann der Träger eines erfindungsgemäßen Abrichtwerkzeugs nach Art eines Kegelstumpfes ausgebildet sein, dessen größere Grundfläche am Abrichtrad anliegt, während seine Dachfläche auf der vom Abrichtrad abgewandten Seite des Abrichtrades angeordnet ist. Bei einem derart ausgebildeten Träger sind die Umfangsflächen ausgehend vom Abrichtrad zurückweichend schräg ausgerichtet, so dass auch im Bereich des Trägers nahe den Abrichtzähnen ein optimal großer Freiraum zur Verfügung steht.

Um nach der Inbetriebnahme eines neuen, im Bereich seiner mit dem abzurichtenden Werkzeug in Kontakt kommenden Flächen noch besonders scharfen Abrichtrades die Gefahr eines in Folge des Auftretens lokaler Belastungsspitzen übermäßigen Anfangsverschleißes zu mindern, kann an der jeweiligen Schneidkante des Abrichtrades eine Fase oder ein Radius angebracht werden. Um diese Formelemente an der Schneidkante zu erzeugen, können beispielsweise rotierende Bürsten mit diamantbesetzten Borsten eingesetzt werden. Ebenso lassen sich die betreffenden Formelemente auch durch Laserbearbeitung erzeugen.

Eine besonders steife und damit hochbelastbare Ausgestaltung eines erfindungsgemäßen Abrichtwerkzeuges ist **dadurch gekennzeichnet, dass** das Abrichtrad durch mindestens zwei der Form des jeweiligen Abrichtrades entsprechende Scheiben zusammengesetzt ist, die aufeinander liegend gemeinsam an dem Träger befestigt sind. Die zwei oder mehr Scheiben des Abrichtrades stützen sich dann gegenseitig ab. Kommt es zum Ausbrechen von Diamantpartikeln an einer der Scheiben, steht darüber hinaus in dessen unmittelbarer Nähe immer noch Diamantmaterial der jeweils darauf liegenden Scheibe zur Verfügung. Um dabei eine dauerhaft feste und positionsgenaue Verbindung der Scheiben untereinander zu sichern, können die Scheiben untereinander stoffschlüssig verbunden, insbesondere miteinander verklebt sein.

Um die Abtragleistung bei der Abrichtbearbeitung weiter zu verbessern, können in das Abrichtrad im Bereich seiner mit dem abzurichtenden Werkzeug in Kontakt kommenden Schneidflächen, insbesondere in sein Zahnprofil, Einkerbungen eingearbeitet sein. Sind bei einem erfindungsgemäßen Abrichtwerkzeug mehrere aufeinanderliegende Abrichträder vorhanden, so kann dieser Effekt dadurch verstärkt werden, dass zwei Scheiben mit unterschiedlich angeordneten Kerben miteinander kombiniert werden. Durch die dann von Abrichtrad zu Abrichtrad gegeneinander versetzte Anordnung der Kerben wird nicht nur eine besonders hohe Abtragleistung erreicht, sondern auch sichergestellt, dass die am zu bearbeitenden Feinbearbeitungswerkzeug jeweils abzurichtende Fläche einen besonders gleichmäßigen Verlauf erhält.

Nachdem ein erfindungsgemäßes Abrichtrad gemäß einer der voranstehend bereits erläuterten Möglichkeiten erzeugt worden ist, kann das Abrichtrad feinbearbeitet werden, um noch vorhandene Kornspitzen abzutragen, die das angestrebte Hüllprofil überragen. Dazu kann beispielsweise ein genau positionierbarer Laserstrahl eingesetzt werden. Wie bereits im Artikel "Starke (Im-)Pulse für die Mikrobearbeitung" von A. Gillner et al., Mikroproduktion 2/2007, S. 10 - 41, beschrieben, lassen sich mittels Laserstrahl durch extrem kurze Impulse im Pico- und Femto-Sekundenbereich bei hohen Pulsfolgefrequenzen und sehr guter Strahlqualität Diamant-und CBN-Körner ohne thermische Schädigung im µm-Bereich genau bearbeiten. Durch den Einsatz eines Laserstrahls zum Feinbearbeiten des Abrichtrades kann so das üblicherweise zum Erzeugen eines präzise geformten Hüllprofils angewendete, verfahrens- und zeitaufwändige Feinschleifen mit Diamantwerkzeugen vermieden werden.

Um bei der Laserfeinbearbeitung des Abrichtrades eine optimale Schneidleistung zu erzielen, kann der Laserstrahl dabei so geformt werden, dass er eine lange Strahltaille besitzt.

Alternativ ist es auch möglich, einen Laserstrahl einzusetzen, der im Wasserstrahl geführt wird. Ein entsprechendes Verfahren wird unter der Bezeichnung "Microjetverfahren" von der Synova SA (CH) angeboten. Durch den den Laserstrahl einhüllenden und führenden Wasserstrahl wird die bei der Laserbearbeitung am Abrichtrad entstehende Wärme schnell abgeführt, so dass nicht nur eine geometrisch einwandfreie Schnittkante erzielt wird, sondern auch eine Rissbildung oder ähnliche in Folge von Erwärmung eintretende Schädigungen vermieden werden.

Abhängig von der Formgebung der Zähne sowie der Anordnung und Ausrichtung der jeweils zu bearbeitenden Flächen des Abrichtrades kann der Laserstrahl in Profilrichtung (radial) oder in Flankenrichtung (axial) geführt werden, wobei diese Bewegungen erforderlichenfalls auch miteinander kombiniert werden können.

Um die jeweils notwendigen Relativbewegungen zwischen Laserstrahl und Abrichtrad kann eine koordinatengesteuerte mehrachsige handelsübliche Bearbeitungsmaschine verwendet werden. So lässt sich dazu beispielsweise eine um die Laserschneideinrichtung ergänzte Verzahnungshonmaschine einsetzen.

Alternativ kann zur Realisierung der erforderlichen Relativbewegung zwischen Laserstrahl und Abrichtrad auch ein Scannersystem dienen, wobei ein solches Scannersystem durch eine koordinatengesteuerte Bearbeitungsmaschine ergänzt werden kann.

Eine besonders einfache Möglichkeit, die bei der Feinbearbeitung des Abrichtrades mittels Laserstrahl erforderliche Relativbewegung zwischen Laserstrahl und Abrichtrad auszuführen, besteht darin, dass der Laserstrahl in einem Röhrchen geführt ist, in dem ein Ablenkspiegel angeordnet ist, der den Laserstrahl gegen die Zahnflanken lenkt.

Der Laserstrahl kann zudem dazu genutzt werden, zur Herstellung des gewünschten Hüllprofils an den Körnern durch entsprechende Relativbewegung eine spezielle Kornform herzustellen, die den Abrichtvorgang bei keramischen Werkzeugen begünstigt.

Nachfolgend wird die Erfindung anhand einer Ausführungsbeispiele darstellenden Zeichnung näher erläutert. Es zeigen jeweils schematisch in seitlicher Ansicht:
- Fig. 1: ein zur Herstellung eines Abrichtwerkzeuges dienendes Plattenmaterial;
- Fig. 2: ein Abrichtwerkzeug zum Abrichten eines Werkzeugs für die Feinbearbeitung eines Zahnrades;
- Fig. 3: einen Ausschnitt des Abrichtwerkzeugs in einer vergrößerten perspektivischen Darstellung;
- Fig. 4: einen Ausschnitt eines alternativen Abrichtwerkzeugs in einer vergrößerten, der Fig. 3 entsprechenden perspektivischen Darstellung.

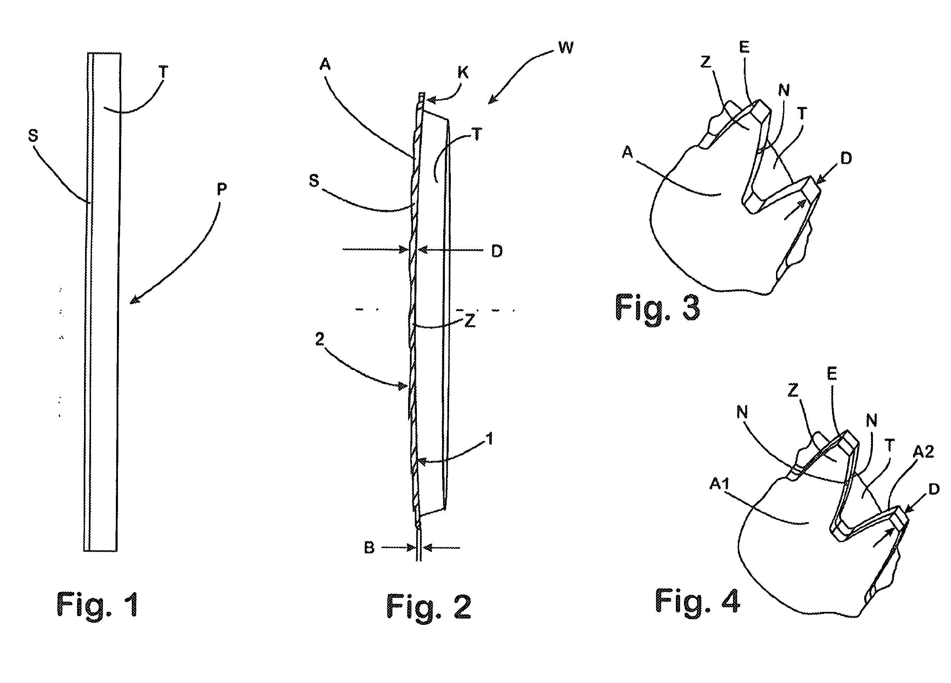

Um in der voranstehend beschriebenen Weise ausgebildete Abrichträder A mit der erfindungsgemäß geforderten minimierten Breite herstellen zu können, wird hier vorgeschlagen, das Abrichtrad A des in Fig. 2 dargestellten Abrichtwerkzeugs W aus einem Plattenmaterial P zu erzeugen, das ein plattenförmiges Trägermaterial T und eine von dem Trägermaterial getragene Diamantschicht S umfasst.

Derartige Plattenmaterialien P sind vergleichbar kostengünstig auf dem Markt erhältlich und lassen sich großtechnisch durch Abscheidung von synthetischem Diamant S auf dem Trägermaterial T herstellen. Als Werkstoff für das Trägermaterial T kann dabei beispielsweise ein Hartmetall dienen.

Aus dem Diamant-Plattenmaterial P lässt sich beispielsweise mittels Laser-, Wasserstrahl- oder Erodierschneiden das jeweilige, hier zahnradförmige Abrichtrad A formgenau herausschneiden.

Das auf diese Weise erhaltene Abrichtrad A weist eine extrem reduzierte Dicke D, die in der Regel weniger als 1 mm, insbesondere bis maximal 0,5 mm, beträgt, und damit einhergehend eine ebenso minimierte Breite B seiner Abrichtzähne Z auf. Gleichzeitig sind die Kanten zwischen den Zahnkopfflächen, den Zahnflanken und den Stirnseiten 1,2 des schmalen Abrichtrades A besonders scharfkantig ausgebildet. Infolgedessen lässt sich mit einem erfindungsgemäß erzeugten Abrichtrad A am zu bearbeitenden, hier nicht gezeigten Feinbearbeitungswerkzeug nicht nur eine besonders gute Schneidleistung, sondern auch eine besonders präzise Formgebung erzielen.

Um am Abrichtrad A auch im Bereich des Übergangs zu dem Trägermaterial T eine freiliegende Kante K zu erzeugen, wird das Trägermaterial T an dieser Stelle angeschrägt oder in anderer geeigneter Form so abgetragen, dass das Trägermaterial T gegenüber dem Umfangsbereich in die Diamantschicht S, in den die Abrichtzähne Z eingeformt sind, zurückspringt. Beim hier gezeigten Ausführungsbeispiel ist das Trägermaterial T dementsprechend nach Art eines Kegelstumpfes geformt, der mit seiner größeren Grundfläche am Abrichtrad A anliegt.

Beim in Fig. 2 gezeigten Abrichtwerkzeug W bildet das derart geformte Trägermaterial T den Träger, an dem das Abrichtrad A gehalten ist.

Dabei hat sich überraschend gezeigt, dass die Diamantschicht S und das Trägermaterial T des Plattenmaterials P einen so festen Verbund eingehen, dass die Diamantschicht S trotz der extremen reduzierten Dicke (= "Schmalheit") D des Abrichtrades A besonders hohe Standzeiten erreicht.

Zur Verbesserung der Abtragleistung können in die mit dem abzurichtenden, nicht dargestellten Feinbearbeitungswerkzeug in Kontakt kommenden Flächen Einkerbungen N eingeformt sein, von denen hier der Übersichtlichkeit halber nur eine gezeigt ist. Die Schneidkante E der Zähne des Abrichtrades A kann unter Ausbildung einer Fase angeschrägt oder unter Ausbildung eines Radius abgerundet sein, um dort ein Ausbrechen von Diamantkörnern in Folge von Belastungsspitzen zu vermeiden.

Wie in Fig. 4 angedeutet, ist es auch möglich, das Abrichtrad A aus zwei oder mehr gleich geformten Scheiben A1,A2 zusammenzusetzen, die aufeinander liegend miteinander fest verklebt sind. Die Einkerbungen N dieser Scheiben A1,A2 können dabei versetzt zueinander angeordnet sein, um einen besonders gleichmäßigen Materialabtrag am abzurichtenden Feinbearbeitungswerkzeug zu erreichen.

Im Abrichtbetrieb kann das Abrichtwerkzeug mit Schwingungen beaufschlagt werden, die im Bereich von 20 bis 40 kHz liegen, um die Abtragleistung weiter zu erhöhen.

### BEZUGSZEICHEN

- 1,2: Stirnseiten des Abrichtrades A
- A: Abrichträder
- A1,A2: Scheiben
- B: Breite (= Dicke D) der Abrichtzähne Z des Abrichtrades A
- D: Dicke des Abrichtrades A
- E: Schneidkante der Zähne Z des Abrichtrades A
- K: Kante
- N: Einkerbungen
- P: Plattenmaterial
- S: Diamantschicht
- T: Trägermaterial
- W: Abrichtwerkzeug
- Z: Abrichtzähne des Abrichtrades A

## Patentansprüche

1. Abrichtrad für das Abrichten von eine Verzahnung aufweisenden Werkzeugen für die Feinbearbeitung von Werkstücken, wobei an dem Abrichtrad (A) mindestens ein Abrichtzahn (Z) ausgebildet ist, der beim Abrichten mit dem zu abzurichtenden Werkzeug in Kontakt kommt, **dadurch**
**gekennzeichnet, dass** mindestens der Abrichtzahn (Z) aus einem Diamantwerkstoff gefertigt ist und **dass** die Dicke (D) des Abrichtrads (A) im Bereich des mit dem abzurichtenden Werkzeug in Eingriff kommenden Abrichtzahnes (Z) auf maximal 1,2 mm beschränkt ist.

2. Abrichtrad nach Anspruch 1, **dadurch**
**gekennzeichnet, dass** seine Dicke (D) zumindest im Bereich des Abrichtzahnes (Z) auf höchstens 1,0 mm beschränkt ist.

3. Abrichtrad nach Anspruch 2, **dadurch**
**gekennzeichnet, dass** seine Dicke zumindest im Bereich des Abrichtzahnes (Z) mindestens 0,5 mm beträgt.

4. Abrichtrad nach einem der voranstehenden Ansprüche,
**dadurch gekennzeichnet, dass** es vollständig aus Diamantwerkstoff besteht.

5. Abrichtrad nach einem der voranstehenden Ansprüche,
**dadurch gekennzeichnet, dass** seine Dicke (D) an keiner Stelle dicker ist als im Bereich des Abrichtzahns (Z).

6. Abrichtrad nach einem der voranstehenden Ansprüche,
**dadurch gekennzeichnet, dass** der Diamantwerkstoff polykristalliner Diamant ist.

7. Abrichtrad nach einem der Ansprüche 1 bis 5,
**dadurch gekennzeichnet, dass** der Diamantwerkstoff ein monokristallines synthetische erzeugte Diamantblatt ist.

8. Abrichtrad nach einem der voranstehenden Ansprüche,
**dadurch gekennzeichnet, dass** an der Schneidkante (E) des Abrichtzahns (Z) eine Fase ausgebildet ist.

9. Abrichtrad nach einem der Ansprüche 1 bis 7,
**dadurch gekennzeichnet, dass** an der Schneidkante (E) des Abrichtzahns (Z) ein Radius ausgebildet ist.

10. Abrichtrad nach einem der voranstehenden Ansprüche,
**dadurch gekennzeichnet, dass** es mehrere in gleichen Winkelabständen um seinen Umfang herum verteilt angeordnete Abrichtzähne (Z) aufweist, deren Dicke (D) jeweils in gleicher Weise beschränkt ist.

11. Abrichtwerkzeug für das Abrichten von eine Verzahnung aufweisenden Werkzeugen für die Feinbearbeitung von Werkstücken, mit einem gemäß einem der Ansprüche 1 bis 10 ausgebildeten Abrichtrad (A) und einem das Abrichtrad (A) tragenden Träger (T).

12. Abrichtwerkzeug nach Anspruch 11, **dadurch**
**gekennzeichnet, dass** der Träger (T) scheibenförmig ausgebildet ist.

13. Abrichtwerkzeug nach Anspruch 12, **dadurch**
**gekennzeichnet, dass** der Träger (T) die Form eines Kegelstumpfes aufweist, dessen Grundfläche an dem Abrichtrad (A) anliegt.

14. Abrichtwerkzeug nach einem der Ansprüche 11 bis 13,
**dadurch gekennzeichnet, dass** das Diamantmaterial des Abrichtrades (A) als polykristallines Dickschichtsubstrat aus der Gasphase auf den Träger (T) abgeschiedenen ist.

15. Abrichtwerkzeug nach einem der Ansprüche 11 bis 14,
**dadurch gekennzeichnet, dass** das Abrichtrad (A) auf den Träger (T) aufgelötet ist.

16. Abrichtwerkzeug nach einem der Ansprüche 11 bis 15,
**dadurch gekennzeichnet, dass** das Abrichtrad (A) durch mindestens zwei der Form des jeweiligen Abrichtrades (A) entsprechende Scheiben (A1,A2) zusammengesetzt ist, die aufeinander liegend gemeinsam an dem Träger (T) befestigt sind.

17. Abrichtwerkzeug nach Anspruch 16, **dadurch**
**gekennzeichnet, dass** die Scheiben (A1,A2) untereinander stoffschlüssig fest miteinander verbunden sind.

18. Abrichtwerkzeug nach einem der Ansprüche 11 bis 17,
**dadurch gekennzeichnet, dass** das Abrichtrad (A) im Bereich seiner mit dem abzurichtenden Werkzeug in Kontakt kommenden Schneidflächen mit Einkerbungen (N) versehen ist.

19. Abrichtwerkzeug einem der Ansprüche 16 bis 18,
**dadurch gekennzeichnet, dass** in mindestens eine der Scheiben (A1,A2), aus denen das Abrichtrad (A) zusammengesetzt ist, im Bereich ihrer mit dem abzurichtenden Werkzeug in Kontakt kommenden Schneidflächen Einkerbungen (N) eingeformt sind.

20. Abrichtwerkzeug nach Anspruch 19, **dadurch**
**gekennzeichnet, dass** in mindestens zwei der Scheiben (A1,A2), aus denen das Abrichtrad (A) zusammengesetzt ist, im Bereich ihrer mit dem abzurichtenden Werkzeug in Kontakt kommenden Schneidflächen Einkerbungen (N) eingeformt sind und die Einkerbungen (N) der einen Scheibe (A1) versetzt gegenüber den Einkerbungen (N) der anderen Scheibe (A2) angeordnet sind.

21. Verwendung eines gemäß einem der Ansprüche 11 bis 20 ausgebildeten Abrichtwerkzeugs zum Abrichten von Werkzeugen für die Feinbearbeitung von Zahnrädern.

## Claims

1. Dressing wheel for dressing toothed tools for the finish-machining of workpieces, wherein there is formed on the dressing wheel (A) at least one dressing tooth (Z) which during the dressing process comes into contact with the tool to be dressed, **characterised in that** at least the dressing tooth (Z) is made from a diamond material, and **in that** the thickness (D) of the dressing wheel (A) is limited to at most 1.2 mm in the region of the dressing tooth (Z) which comes into engagement with the tool to be dressed.

2. Dressing wheel according to Claim 1, **characterised in that** its thickness (D) is limited to at most 1.0 mm in the region of the dressing tooth (Z).

3. Dressing wheel according to Claim 2, **characterised in that** its thickness is at least 0.5 mm in the region of the dressing tooth (Z).

4. Dressing wheel according to any of the preceding claims, **characterised in that** it is made entirely of diamond material.

5. Dressing wheel according to any of the preceding claims, **characterised in that** its thickness (D) at no point is thicker than in the region of the dressing tooth (Z).

6. Dressing wheel according to any of the preceding claims, **characterised in that** the diamond material is polycrystalline diamond.

7. Dressing wheel according to any of Claims 1 to 5, **characterised in that** the diamond material is a monocrystalline, synthetically-produced diamond blade.

8. Dressing wheel according to any of the preceding claims, **characterised in that** a chamfer is formed on the cutting edge (E) of the dressing tooth (Z).

9. Dressing wheel according to any of Claims 1 to 7, **characterised in that** a radius is formed on the cutting edge (E) of the dressing tooth (Z).

10. Dressing wheel according to any of the preceding claims, **characterised in that** it has a plurality of dressing teeth (Z) distributed at equal angular spacings around its circumference, the thickness (D) of said teeth in each case being limited in the same way.

11. Dressing tool for dressing toothed tools for the finish-machining of workpieces, comprising a dressing wheel (A) designed according to any of Claims 1 to 10 and a carrier (T) which carries the dressing wheel (A).

12. Dressing tool according to Claim 11, **characterised in that** the carrier (T) is designed in the manner of a disc.

13. Dressing tool according to Claim 12, **characterised in that** the carrier (T) has the shape of a truncated cone, the base surface of which bears against the dressing wheel (A).

14. Dressing tool according to any of Claims 11 to 13, **characterised in that** the diamond material of the dressing wheel (A) is deposited from the gas phase onto the carrier (T) as a polycrystalline thick layer substrate.

15. Dressing tool according to any of Claims 11 to 14, **characterised in that** the dressing wheel (A) is soldered onto the carrier (T).

16. Dressing tool according to any of Claims 11 to 15, **characterised in that** the dressing wheel (A) is composed of at least two discs (A1, A2) which correspond to the shape of the dressing wheel (A) in question and which are jointly fastened to the carrier (T) in a manner bearing one against the other.

17. Dressing tool according to Claim 16, **characterised in that** the discs (A1, A2) are materially bonded to one another in a secure manner.

18. Dressing tool according to any of Claims 11 to 17, **characterised in that** the dressing wheel (A) is provided with notches (N) in the region of its cutting faces which come into contact with the tool to be dressed.

19. Dressing tool according to any of Claims 16 to 18, **characterised in that**, in at least one of the discs (A1, A2) of which the dressing wheel (A) is composed, notches (N) are formed in the region of its cutting faces which come into contact with the tool to be dressed.

20. Dressing tool according to Claim 19, **characterised in that**, in at least two of the discs (A1, A2) of which the dressing wheel (A) is composed, notches (N) are formed in the region of their cutting faces which come into contact with the tool to be dressed, and the notches (N) of one disc (A1) are arranged offset in relation to the notches (N) of the other disc (A2).

21. Use of a dressing tool designed according to any of Claims 11 to 20 for dressing tools for the finish-machining of gears.

## Revendications

1. Roue d'ajustement destinée à ajuster des outils dotés d'une denture pour le traitement de précision de pièces à usiner, sachant que, sur la roue d'ajustement (A), est formée au moins une dent d'ajustement (Z) qui, lors de l'ajustement, entre en contact avec l'outil à ajuster,
c**aractérisé**e **en ce qu**'au moins la dent d'ajustement (Z) est fabriquée avec un matériau diamant et q u e l'épaisseur (D) de la roue d'ajustement (A) est limitée au maximum à 1,2 mm dans la région de la dent d'ajustement (Z) qui entre en contact avec l'outil à ajuster.

2. Roue d'ajustement selon la revendication 1,
**caractérisée en ce que** son épaisseur (D) est limitée au maximum à 1,0 mm au moins dans la région de la dent d'ajustement (Z).

3. Roue d'ajustement selon la revendication 2,
**caractérisée en ce que** son épaisseur est d'au moins 0,5 mm, au moins dans la région de la dent d'ajustement (Z).

4. Roue d'ajustement selon l'une des revendications précédentes,
**caractérisée en ce qu'**elle consiste entièrement en matériau diamant.

5. Roue d'ajustement selon l'une des revendications précédentes,
**caractérisée en ce que** son épaisseur (D) n'est à aucun endroit plus grande que dans la région de la dent d'ajustement (Z).

6. Roue d'ajustement selon l'une des revendications précédentes,
**caractérisée en ce que** le matériau diamant est du diamant polycristallin.

7. Roue d'ajustement selon l'une des revendications 1 à 5,
**caractérisée en ce que** le matériau diamant est du diamant monocristallin, d'origine synthétique.

8. Roue d'ajustement selon l'une des revendications précédentes,
**caractérisée en ce que**, sur le bord de coupe (E) de la dent d'ajustement (Z), est formé un chanfrein.

9. Roue d'ajustement dotée d'un dispositif antieffraction selon l'une des revendications 1 à 7,
**caractérisée en ce que**, sur le bord de coupe (E) de la dent d'ajustement (Z), un rayon est formé.

10. Roue d'ajustement selon l'une des revendications précédentes,
**caractérisée en ce qu'**elle est dotée de plusieurs dents d'ajustement (Z) réparties sur sa périphérie, à intervalles angulaires réguliers les unes des autres, dont l'épaisseur (D) est respectivement limitée de la même manière.

11. Outil d'ajustement pour l'ajustement d'outils de traitement de précision de pièces à usiner pourvu d'une denture, lequel outil d'ajustement comprend une roue d'ajustement (A) conçue selon l'une des revendications 1 à 10 et un support (T) qui porte la roue d'ajustement (A).

12. Outil d'ajustement selon la revendication 11, **caractérisé en ce que** le support (T) est réalisé en forme de plaque.

13. Outil d'ajustement selon la revendication 12,
**caractérisé en ce que** le support (T) présente la forme d'un cône tronqué dont la surface de base porte contre la roue d'ajustement (A).

14. Outil d'ajustement selon l'une des revendications 11 à 13,
**caractérisé en ce que** le matériau diamant de la roue d'ajustement (A) est déposé, à partir de la phase gazeuse, sur le support (T) en tant que substrat polycristallin à couche épaisse.

15. Outil d'ajustement selon l'une des revendications 11 à 14,
**caractérisé en ce que** la roue d'ajustement (A) est brasée sur le support (T).

16. Outil d'ajustement selon l'une des revendications 11 à 15,
**caractérisé en ce que** la roue d'ajustement (A) est composée d'au moins deux plaques (A1, A2) de forme correspondant à celle de la roue d'ajustement (A) respective, lesquelles plaques, posées l'une sur l'autre, sont fixées en commun sur le support (T)

17. Outil d'ajustement selon la revendication 16,
**caractérisé en ce que** les plaques (A1, A2) sont reliées fixement ensemble par fusion de matière.

18. Outil d'ajustement selon l'une des revendications précédentes 11 à 17,
**caractérisé en ce que** la roue d'ajustement (A) est pourvue d'rainures (N) dans la région de ses surfaces de coupe qui entrent en contact avec l'outil à ajuster.

19. Outil d'ajustement selon l'une des revendications 16 à 18,
**caractérisé en ce que**, dans au moins l'une des plaques (A1, A2), dont la roue d'ajustement (A) est composée, des rainures (N) sont formées dans la région des surfaces de coupe qui entrent en contact avec l'outil à ajuster.

20. Outil d'ajustement selon la revendication 19,
**caractérisé en ce que**, dans au moins l'une des plaques (A1, A2), dont la roue d'ajustement (A) est composée, des rainures (N) sont formées dans la région des surfaces de coupe qui entrent en contact avec l'outil à ajuster, et que les rainures (N) de l'une (Al) des plaques sont décalées par rapport aux rainures (N) de l'autre plaque (A2).

21. Utilisation d'un outil d'ajustement selon l'une des revendications 11 à 20 destiné à l'ajustement d'outils pour le traitement de précision de roues dentées.
